# EUROPEAN PATENT SPECIFICATION

(11) **EP 1 031 758 B1**
(45) Date of publication and mention of the grant of the patent: **11.08.2004**
(21) Application number: 99308665.1
(22) Date of filing: 02.11.1999
(51) Int. Cl.: F16F 13/12, F16F 13/16

(54) **Vibration damping assemblies**
Schwingungsdämpfende Einrichtungen
Unités d'amortissement de vibrations

(30) Priority: 23.02.1999 GB 9904135
(43) Date of publication of application: 30.08.2000
(73) Proprietor: TRELLEBORG AB, 231 22 Trelleborg (SE)
(72) Inventor: Fort, Patrice, 44470 Thouare (FR); Drumel, Philippe, 44470 Sainte Luce Sur Loire (FR); Chauvet, Ludovic, 44470 Mauves Sur Loire (FR)
(74) Representative: Preissner, Nicolaus

(56) References cited:
- EP-A- 0 117 139
- EP-A- 0 371 536
- DE-A- 1 630 303
- DE-A- 19 515 839
- GB-A- 2 192 968
- US-A- 3 920 231
- US-A- 5 042 785
- US-A- 5 078 369
- PATENT ABSTRACTS OF JAPAN vol. 008, no. 083 (M-290), 17 April 1984 (1984-04-17) & JP 59 001830 A (NISSAN JIDOSHA KK), 7 January 1984 (1984-01-07)

## Description

The invention relates to a fluid-filled limiter for damping and limiting relative vibrations between the engine of a vehicle and the body of the vehicle. The fluid-filled limiter comprises a rigid base for connection to one of the body and the engine; a resilient body fixed to the base and arranged in use for periodic impacting with the other of the engine and the body and arranged resiliently to flex in response to such impacting; and a self-contained flexible-walled chamber defined between the base and the resilient body and filled with hydraulic fluid. The chamber is relatively incompressible in a direction towards the base. The stiffness of the limiter is greater in the direction towards the base than in a shear direction along the interface between the base and the resilient body.

A vibration damping assembly for damping relative vibrations between two rigid members, comprising a resilient body for mounting between two members is known from GB-A-2 192 968 which describes a bushing having rigid inner and outer armatures with an elastomeric interconnection. The bushing has rigid inner and outer armatures with an elastomeric interconnection. The interconnection or elastomeric shear spring includes two chambers which are filled with fluid. The chambers are in fluid communication through a peripheral restricted flow path for shock damping up on the deformation of the spring and consequent extension or compression of the chamber due to shocks imparted to the bushing. The two chambers and the fluid-filled path, which serves to adjust the resonance of the bushing, together form a self-contained cavity.

Moreover, the US-A-5 078 369 discloses an elastically yieldable connection which comprises a block of elastomer material. Two armatures which are relatively movable are connected to the block. The connection comprises at least one deformable sealed chamber which is filled with a liquid and arranged between two portions of each of the two armatures so that to increase the elastic stiffness of the connection in a first direction of relative displacement of the armatures substantially perpendicular to a plane parallel to the extension of the two armatures.

Vibration damping assemblies embodying the invention, and to be described in more detail below by way of example only, are for mounting between the engine of a motor vehicle and the body of the vehicle, so as to damp engine vibrations and to isolate them from the body. Such assemblies may also be used in vehicle suspension applications.

According to the invention as defined in claim 1 the limiter is characterized in that the resilient body comprises two bodies mounted on opposite sides of the base such as to define chambers formed opposite one another and separated by the rigid base. The bodies are able to expand under an increased pressure in the chambers thereof. The chambers are connected via at least one canal, thereby, as one of the bodies is compressed, allowing the fluid to be forced through the canal into the chamber formed in the other body.

Vibration damping assemblies embodying the invention and in the form of limiters for engine mounts for use in motor vehicles will now be described by way of example, with reference to the accompanying drawings in which:
Figure 1 is a schematic cross section through a known assembly which is not an embodiment of the present invention;
Figure 2 is a schematic cross section through a known assembly which is not an embodiment of the present invention;
Figure 3 is a schematic cross section through a known assembly which is not an embodiment of the present invention;
Figure 4 is a schematic cross section through a known assembly which is not an embodiment of the present invention;
Figure 5 is a schematic cross section through an assembly in accordance with the invention showing two assemblies working in combination;
Figure 6 is a schematic cross section of a known damping assembly which is not an embodiment of the present invention; and
Figure 7 is a schematic cross section of an alternative embodiment of the known assembly pf Figure 6.

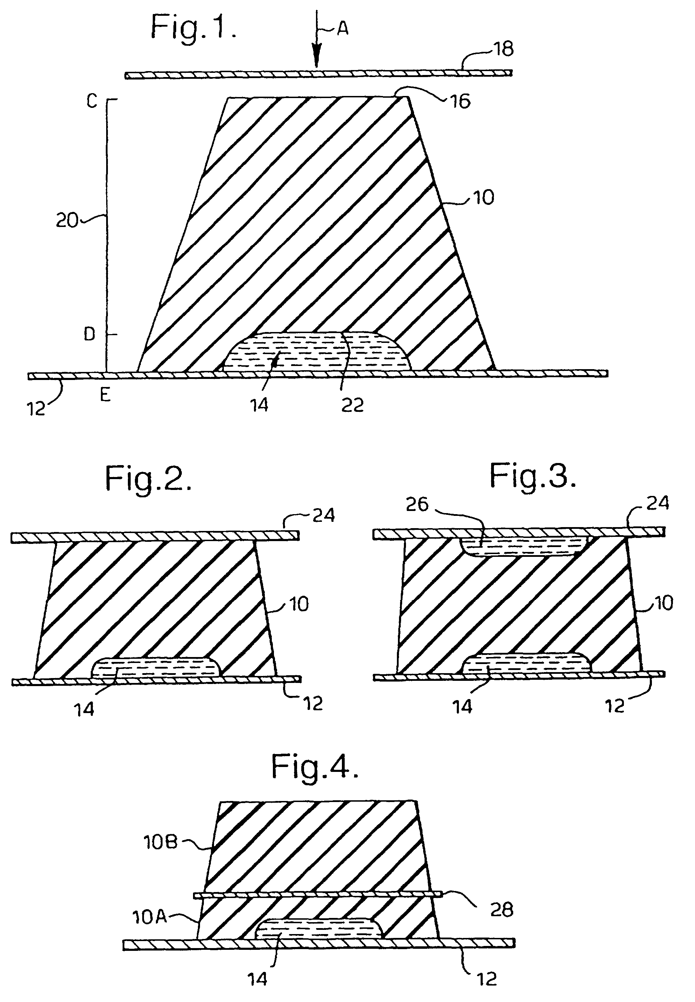

With reference to Figure 1, a limiter comprises a resilient body 10 typically of stiff rubber. This is fixed to a rigid base 12 which may be mounted on or form part of a vehicle body. Typically, the resilient body typically is adhesive fixed to the base 12.

The resilient body 10 is recessed adjacent the base 12 to form a cavity 14 containing a hydraulic fluid.

In use, the base 12 of the limiter is fixed to a vehicle body so that its upper surface 16 is located close to the engine of the vehicle. A surface of a vehicle engine is shown schematically by line 18. The engine will be supported by resilient engine mounts (not shown) which will allow a limited amount of movement of the engine relative to the vehicle body.

As the vehicle engine vibrates and also as the vehicle is accelerated, decelerated and turned through corners, the engine mounts are subjected to different loads. It is necessary in some way to limit movement of the engine about its mounts and this may be achieved by strategic placement of one or more of the limiters of the present invention.

In limiter applications, the shear stiffness is an important parameter since it has an effect on the forces which are transmitted in the form of vibrations to the vehicle body.

Under compression in the general direction of the arrow marked A in the Figure, the limiter exhibits high stiffness relative to its stiffness in the shear direction along the direction of the base 12.

As the resilient body 10 is deformed towards the base 12 by impact with the surface 18, the fluid-filled chamber 14 resists compression because the hydraulic fluid contained in the chamber is relatively incompressible and is being compressed against the rigid base 12. Thus the portion of the limiter between C and D on line 20 exhibits the stiffness expected from a solid rubber limiter and the portion between D and E on line 20 exhibits increased stiffness.

However, when a shear force generally along the direction of the base 12 is exerted on the limiter, the fluid is substantially not compressed since the chamber walls are free to deform in the shear direction and thus the chamber does not contribute significantly to the stiffness of the limiter. The result is reduced stiffness in the shear direction compared with the stiffness in the direction of arrow A generally towards the base 12.

The limiter may be arranged to exhibit greatly increased stiffness under overload conditions. The chamber 14 may be arranged to be sufficiently shallow in height that under overload conditions when more than a predetermined force is applied in the direction A, the upper wall 22 of the chamber 14 comes into contact with the rigid base 12. Although in this condition, the shear stiffness of the limiter is increased, this overload protection prevents damage to the limiter through excessive pressures in the chamber 14.

The construction described above is particularly advantageous since it is simple to manufacture and yet may be tuned to provide different stiffness characteristics in different directions. It will be appreciated that changes in the dimensions of the chamber and the relative area of the base 12 covered by the resilient body 10 and chamber 14 respectively will affect the absolute and relative stiffness in the shear and vertical directions.

It will also be appreciated with reference to Figures 2, 3 and 4 that a rigid material may form a rigid layer 24 fixed to the surface 16 and furthermore another chamber 26 may be formed at the interface between that layer and the body 10. Such an arrangement may also be stacked so that an intermediate rigid layer 28 is sandwiched between two or more resilient bodies 10A, 10B with fluid-filled chambers formed at some or all of the interfaces between the resilient bodies 10A, 10B and the rigid base 12 and layer or layers 28. The provision of more rigid layers and/or chambers allows further flexibility for tuning the performance characteristics of the limiter. The uppermost layer 24 may be fixed to a vehicle body or engine.

The base 12 may alternatively be mounted on a vehicle engine with periodic impacts occurring between the vehicle body and the surface 16.

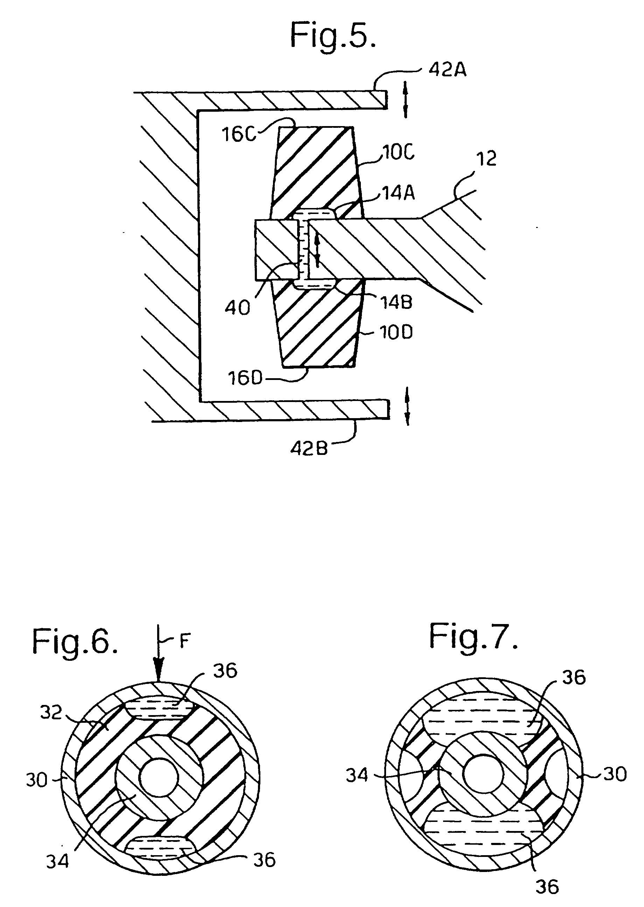

A hydro-elastic effect may be achieved by mounting two bodies 10C, 10D on a single base 12 as shown in Figure 5. The bodies may be mounted on opposite sides of the base 12 generally in registry. In this arrangement, chambers 14A, 14B are formed opposite one another separated by the rigid base 12. By connecting the chambers together via a canal 40 having a relatively narrow cross sectional area or some other flow limiting arrangement, as one of the bodies 10C, 10D is compressed, fluid is forced through the canal into the chamber formed in the other body. The other body is able to expand under the increased pressure in its chamber. The second chamber acts as a compensation chamber. This arrangement retains the characteristic of low stiffness in the shear direction.

The canal 40 may be arranged to provide relatively easy passage of fluid at acoustic frequencies (typically between 20Hz and 500Hz). This results in low stiffness in the non-shear direction for vibrations in the acoustic frequency range and hence good isolation of the vehicle body from those frequencies.

To achieve this effect, the interconnection between the two chambers 14A and 14B may be made using two canals (not shown). One of the canals may be relatively long and narrow (which provides low frequency damping) and the other canal may be relatively short and wide (which provides high frequency damping). The short canal should have a clapet with limited movement in each flow direction. This allows high speed, low amplitude fluid flow but the limited clapet movement substantially prevents high amplitude flows. For high amplitude vibrations, fluid flows mostly through the long, narrow canal. Using these effects, the resonance of the arrangement of Figure 5 may be tuned to give a desired stiffness -versus- frequency characteristic.

The whole assembly may be mounted on one of a vehicle body or an engine between rigid tangs 42A, 42B of a fork connected to the other of the vehicle body or the engine such. Thus, reciprocal movement of the engine relative to the vehicle body may be damped and limited by periodic impacts between the surfaces 16C, 16D of the bodies 10C, 10D and the tangs 42A, 42B.

Figure 6 shows an articulation for coupling components where it is desired to exhibit different axial and radial stiffnesses.

An armature 30 for connection to one of the components encircles an annulus of resilient material (typically hard rubber) 32. In the centre of the annulus 32 is an inner armature 34 for connection to the other of the components. Formed between the inner surface of the outer armature 30 and the outer surface of the annulus 32 are fluid-filled chambers 36. Using the principles described above, the articulation exhibits higher stiffness in the direction of arrow F than in the axial direction (into and out of the plane of the Figure).

This arrangement maintains good axial sliding movement under radial load and is particularly suitable for vehicle suspension applications. Since the chambers are not interconnected, there is no fluid circulation between the chambers and therefore no damping due to fluid resonance.

Figure 7 shows an alternative arrangement where the chambers 36 are bounded both by the inner and outer armatures thereby dividing the "annulus" into two portions. This arrangement exhibits increased radial stiffness and decreased axial stiffness relative to the arrangement of Figure 2.

It will be appreciated that one only or more than two chambers may be formed in the annulus 32 and these need not be spaced equiangularly as shown in Figures 6 and 7. It will also be appreciated that one or more chambers may be formed between the inner surface of the annulus 32 and the outer surface of the inner armature 34. Furthermore, the annulus 32 need not extend throughout the whole depth of the armatures 30, 34, i.e. into the plane of the Figures. Similarly, the chamber or chambers may only extend part way through the depths of the armatures.

## Claims

1. A fluid-filled limiter for damping and limiting relative vibrations between the engine of a vehicle and the body of the vehicle, comprising
a) a rigid base (12) for connection to one of the body and the engine;
b) a resilient body (10) fixed to the base (12) and arranged in use for periodic impacting with the other (42) of the engine and the body and arranged resiliently to flex in response to such impacting; and
c) a self-contained flexible-walled chamber (14) defined between the base (12) and the resilient body (10) and filled with hydraulic fluid, the chamber (14) being relatively incompressible in a direction towards the base (12);
whereby the stiffness of the limiter is greater in the direction towards the base (12) than in a shear direction along the interface between the base (12) and the resilient body (10), **characterized in that** the resilient body (10) comprises two bodies (10C, 10D) mounted on opposite sides of the base (12) such as to define chambers (14A, 14B) formed opposite one another and separated by the rigid base (12), the bodies (10C, 10D) being able to expand under an increased pressure in the chambers (14A, 14B) thereof, and the chambers (14A, 14B) being connected via at least one canal (40), thereby, as one of the bodies (10C) is compressed, allowing the fluid to be forced through the canal (40) into the chamber (14B) formed in the other body (10D).

2. The limiter according to claim 1, **characterised in that** the canal (40) is arranged such as to provide relatively easy passage of fluid at acoustic frequencies between 20 Hz and 500 Hz.

3. The limiter according to claim 1 or 2, **characterised by** two canals (40).

4. The limiter according to claim 3, **characterised in that** one of the canals (40) is relatively long and narrow, thereby providing low frequency damping, whereas the other canal (40) is relatively short and wide, thereby providing high frequency damping.

5. The limiter according to claim 4, **characterised in that** the short canal (40) has a clapet with limited movement in each flow direction.

6. The limiter according to any of the claims 1 to 5, **characterised in that** the bodies (10C, 10D) include surfaces (16C, 16D) facing tangs (42A, 42B) of a fork connected to one of the engine and the body, thereby damping and.limiting a reciprocal movement of the engine relative to the body by periodic impacts between the surfaces (16C, 16D) and the tangs (42A, 42B).

## Patentansprüche

1. Mit Flüssigkeit gefüllte Begrenzungseinrichtung zur Dämpfung und Begrenzung relativer Schwingungen zwischen dem Motor und der Karosserie eines Fahrzeuges, aufweisend
a) eine starre Basis (12) zur Verbindung mit der Karosserie oder dem Motor;
b) einen elastischen Körper (10), der an der Basis (12) befestigt und so angeordnet ist, dass er im Einsatz periodisch auf der anderen (42) der Einheiten Karosserie oder Motor auftrifft und der sich als Reaktion auf ein solches Auftreffen elastisch durchbiegt; und
c) eine in sich geschlossene Kammer (14) mit flexiblen Wänden, die zwischen der Basis (12) und dem elastischen Körper (10) begrenzt und mit Hydraulikflüssigkeit gefüllt ist, wobei die Kammer (14) in einer Richtung zur Basis (12) hin relativ nicht komprimierbar ist;
wobei die Steifheit dieser Begrenzungseinrichtung in der Richtung zur Basis (12) hin höher ist als in der Scherrichtung längs der Grenzfläche zwischen der Basis (12) und dem elastischen Körper (10), **dadurch gekennzeichnet, dass** der elastische Körper (10) zwei Körper (10C und 10D) aufweist, die auf einander gegenüberliegenden Seiten der Basis (12) so angebracht sind, dass einander gegenüberliegende und durch die Basis (12) getrennte Kammern (14A und 14B) gebildet werden, wobei sich die Körper (10C, 10D) unter erhöhtem Druck in den Kammern (14A, 14B) ausdehnen können und wobei die Kammern (14A, 14B) über mindestens einen Kanal (40) miteinander verbunden sind, so dass die Flüssigkeit beim Zusammendrücken von einem der Körper (10C) durch den Kanal (40) in die im anderen Körper (10D) gebildete Kammer (14B) gepresst werden kann.

2. Begrenzungseinrichtung nach Anspruch 1, **dadurch gekennzeichnet, dass** der Kanal (40) so angeordnet ist, dass die Flüssigkeit bei akustischen Frequenzen zwischen 20 Hz und 500 Hz relativ leicht überströmen kann.

3. Begrenzungseinrichtung nach Anspruch 1 oder 2, **dadurch gekennzeichnet, dass** zwei Kanäle (40) vorgesehen sind.

4. Begrenzungseinrichtung nach Anspruch 3, **dadurch gekennzeichnet, dass** einer der Kanäle (40) relativ lang und schmal ist, so dass niedrige Frequenzen gedämpft werden, während der andere Kanal (40) relativ kurz und breit ist, so dass hohe Frequenzen gedämpft werden.

5. Begrenzungseinrichtung nach Anspruch 4, **dadurch gekennzeichnet, dass** der kurze Kanal (40) ein Klappventil mit einer in jeder Fließrichtung begrenzten Bewegung aufweist.

6. Begrenzungseinrichtung nach einem der Ansprüche 1 bis 5, **dadurch gekennzeichnet, dass** die Körper (10C, 10D) Oberflächen (16C, 16D) aufweisen, die den Zinken (42A, 42B) einer mit dem Motor oder der Karosserie verbundenen Gabel zugewandt sind, und dadurch eine wechselseitige Bewegung des Motors relativ zur Karosserie durch periodisches Aufeinandertreffen der Oberflächen (16C, 16D) und der Zinken (42A, 42B) dämpfen und begrenzen.

## Revendications

1. Limiteur rempli de fluide pour amortir et pour limiter des vibrations relatives entre le moteur d'un véhicule et le corps du véhicule, comprenant :
a) une base rigide (12) destinée à être connectée à l'un des éléments parmi le corps et le moteur ;
b) un corps élastique (10) fixé sur la base (12) et agencé en utilisation pour venir périodiquement en impact contre l'autre élément (42) parmi le moteur et le corps et agencé de manière à fléchir élastiquement en réponse à une telle venue en impact ; et
c) une chambre refermée sur elle-même (14) dotée de parois flexibles et définie entre la base (12) et le corps élastique (10), et remplie de fluide hydraulique, la chambre (14) étant relativement incompressible dans une direction vers la base (12) ;
dans lequel la raideur du limiteur dans la direction vers la base (12) est supérieure à celle dans une direction de cisaillement le long de l'interface entre la base (12) et le corps élastique (10), **caractérisé en ce que** le corps élastique (10) comprend deux corps (10C, 10D) montés sur des côtés opposés de la base (12) de manière à définir des chambres (14A, 14B) formées à l'opposé l'une de l'autre et séparées par la base rigide (12), les corps (10C, 10D) étant capables de se dilater sous une augmentation de pression dans leurs chambres (14A, 14B), et les chambres (14A, 14B) étant connectées via au moins un canal (40) de manière, lorsque l'un des corps (10 C) est comprimé, à permettre au fluide d'être forcé à travers le canal (40) jusque dans la chambre (14B) formée dans l'autre corps (10D).

2. Limiteur selon la revendication 1, **caractérisé en ce que** le canal (40) et agencé de manière à assurer un passage relativement aisé au fluide à des fréquences acoustiques entre 20 Hz et 500 Hz.

3. Limiteur selon l'une ou l'autre des revendications 1 et 2, **caractérisé par** deux canaux (40).

4. Limiteur selon la revendication 3, **caractérisé en ce que** l'un des canaux (40) est relativement long et étroit, assurant de ce fait un amortissement à basse fréquence, tandis que l'autre canal (40) est relativement court et large, assurant de ce fait un amortissement à haute fréquence.

5. Limiteur selon la revendication 4, **caractérisé en ce que** le canal court (40) comprend un clapet avec un mouvement limité dans chaque direction d'écoulement.

6. Limiteur selon l'une quelconque des revendications 1 à 5, **caractérisé en ce que** les corps (10C, 10D) incluent des surfaces (16C, 16D) qui font face vers les doigts (42A, 42B) d'une fourche connectée à l'un des éléments parmi le moteur et le corps, en amortissant et en limitant de ce fait un mouvement réciproque du moteur par rapport aux corps par des impacts périodiques entre les surfaces (16C, 16D) et les doigts (42A, 42B).
